# EUROPÄISCHE PATENTSCHRIFT

(11) **EP 0 592 642 B1**
(45) Veröffentlichungstag und Bekanntmachung des Hinweises auf die Patenterteilung: **18.02.1998**
(21) Anmeldenummer: 93909856.2
(22) Anmeldetag: 28.04.1993
(51) Int. Cl.: B60V 1/12

(54) **SEITENWAND-LUFTKISSENFAHRZEUG**
SIDEWALL HOVERCRAFT
AEROGLISSEUR A PAROIS LATERALES

(30) Priorität: 30.04.1992 DE 4214450
(43) Veröffentlichungstag der Anmeldung: 20.04.1994
(73) Patentinhaber: MTG Marinetechnik GmbH, D-22041 Hamburg (DE)
(72) Erfinder: PETERS, Thomas, D-2120 Lüneburg (DE)
(74) Vertreter: Patentanwälte Hauck, Graalfs, Wehnert, Döring, Siemons
(86) Internationale Anmeldenummer: EP9301030
(87) Internationale Veröffentlichungsnummer: WO9322174

(56) Entgegenhaltungen:
- EP-A- 0 365 700
- FR-A- 2 068 772
- GB-A- 2 075 936
- US-A- 3 850 126
- US-A- 4 029 036

## Beschreibung

Die Erfindung bezieht sich auf ein Seitenwand-Luftkissenfahrzeug nach dem Oberbegriff des Patentanspruchs 1.

Aus der EP-0 365 700 ist ein Seitenwand-Luftkissenfahrzeug (SURFACE EFFECT SHIP; SES) bekannt geworden, das aus zwei Rümpfen besteht, die mit einer festen Struktur oberhalb der Wasseroberfläche miteinander verbunden sind. Im Vor- und Hinterschiff befindet sich je eine flexible Schürze, die verhindert, daß die von oben aus mindestens einem Gebläse eingeblasene Luft entweichen kann. Das Fahrzeug wird so vom Luftkissen angehoben, bis es mit den Innenteilen der Rümpfe kaum noch in das Wasser eintaucht. Damit bietet es einen verminderten Wasserwiderstand, was die Erzielung hoher Geschwindigkeiten mit verhältnismäßig geringer Antriebsleistung erlaubt. Dieser Vorteil wird bei bestimmten Seegängen vorn durch Erregung heftiger Bewegungen des Fahrzeugs verringert, zumal durch die Bewegungen ein erheblicher Teil der Luft aus dem Luftkissen nach allen Seiten entweichen kann. Bei dem bekannten Seitenwand-Luftkissenfahrzeug ist ferner zwischen Bug- und Heckschürze eine querverlaufende Trennvorrichtung vorgesehen, die den Luftkissenraum in zwei Abteile unterteilt. Mindestens ein Gebläse sorgt für die Aufrechterhaltung des Luftkissens in jedem Abteil. Ferner ist eine Luftablaßklappe oder dergleichen zur Minderung des Luftkissendrucks vorgesehen. Die zumeist als Schürze ausgebildete Trennvorrichtung hält eine Druckdifferenz zwischen den Abteilen aufrecht. Sie kann so ausgeführt sein, daß sie bei annähernd gleichem Druck in den Abteilen weich und flexibel ist, jedoch bei einer Druckdifferenz relativ steif wird. Mit Hilfe einer derartigen Trennvorrichtung ergibt sich die Möglichkeit, die Stampfbewegungen des Schiffes im Seegang durch Druckdifferenzen in den Abteilen zu beeinflussen. Dies geschieht entweder auf passive Weise, indem die durch Vertikalbewegungen des Fahrzeugs und durch Wellenbewegungen in den Kissen erzeugten Druckdifferenzen die Stampfbewegungen dämpfen. Eine aktive Beeinflussung erfolgt durch Messen von Regelgrößen, wie die Vertikalgeschwindigkeit oder -beschleunigung des Vorschiffs oder eine andere von der Bewegung des Vorschiffs abhängige Größe, durch Abtasten der Wellenkontur oder durch Messen des Luftdrucks in den Abteilungen. Durch willkürlich hervorgerufene Druckerhöhung und Druckentlastung kann im Gegentakt zu den Stampfbewegungen eine aktiv gesteuerte Dämpfung hervorgerufen werden.

Es hat sich indessen herausgestellt, daß eine Steuerung oder Regelung der Luftdrücke in den Abteilen zu erheblichen Luftverlusten führt.

Aus US-A-4 029 036 ist ein Seitenwand-Luftkissenfahrzeug der eingangs genannten Art bekanntgeworden, bei dem die Druckluftzufuhr zu den separaten Abteilen von einem Gebläse aus erfolgt, das über Kanalabschnitte mit den Abteilen verbunden ist. In den Kanalabschnitten befinden sich Drosselklappen. Das bekannte Fahrzeug weist auch eine Steuer- und Regelvorrichtung auf, die den Stampfwinkel oder die Stampfwinkelgeschwindigkeit des Schiffes abtastet als Regelgröße für den Luftdruck in den Luftkissenabteilen.

Aus US-A-3 850 126 ist ein Luftkissenfahrzeug bekanntgeworden, bei dem ebenfalls durch eine Trennvorrichtung unterhalb des Schiffsrumpfes ein vorderes und ein hinteres Abteil gebildet ist. Die Abteile sind durch einen die Trennvorrichtung überbrückenden Kanal verbunden, in dem sich eine Drosselklappe befindet. Die Drosselklappe stellt einen bestimmten Strömungsquerschnitt im Kanal her, um einen gewünschten Differenzdruck zwischen den Abteilen einzustellen.

Der Erfindung liegt die Aufgabe zugrunde, ein Seitenwand-Luftkissenfahrzeug dahingehend auszubilden, daß ohne große Luftverluste das Seegangsverhalten, insbesondere das Stampfverhalten, verbessert wird.

Diese Aufgabe wird gelöst durch die Merkmale des Patentanspruchs 1.

Bei dem erfindungsgemäßen Seitenwand-Luftkissenfahrzeug ist ein getrennter mit den Abteilen verbundener Kanal vorgesehen mit einer von einer Betätigungsvorrichtung verstellbaren, von der Steuer- und Regelvorrichtung steuerbaren Durchlaßvorrichtung, deren Durchtrittsquerschnitt in Abhängigkeit von dem Stampfwinkel, der Stampfwinkelgeschwindigkeit und/oder dem Druck in den Abteilen verstellt wird. Stellen sich aufgrund des Seegangs unterschiedliche Drücke in den Abteilen ein, so ist dies ein Anzeichen für z.B. eine Stampfbewegung des Schiffes. Bei einer geeigneten Drucksituation in den Abteilen läßt sich der Stampfbewegung entgegenwirken, wie an sich bekannt ist. Da dies entsprechende Druckdifferenzen bedingt bzw. ein Ausgleich oder eine Umkehr der Druckdifferenz sieht die Erfindung eine Durchlaßvorrichtung für die Trennvorrichtung vor, die in Abhängigkeit von dem Stampfverhalten des Schiffes und/oder der Druckdifferenz einen mehr oder weniger großen Druckausgleich bewerkstelligt. Es ist nicht mehr nötig, für einen Druckaufbau eine Luftablaßklappe zu öffnen, um im nächsten Augenblick mit Hilfe eines Gebläses erneut einen Druck aufzubauen, der bei der nächsten Welle die Stampfbewegung kompensiert. Die Durchlaßvorrichtung sorgt für eine Verteilung des Druckes in den Abteilungen derart, daß jeweils die gewünschte Druckdifferenz vorliegt, ohne daß Luftverluste in Kauf genommen werden müssen.

Es ist zwar denkbar, die Durchlaßvorrichtung auf einen festen Wert einzustellen. Dies führt zweifellos bereits zu einem verbesserten Stampfverhalten. Da sich jedoch dieser Wert nur auf einen ganz bestimmten Seegang beschränken kann, sieht die Erfindung vor, in Abhängigkeit vom Seegang, also dem gemessenen Stampfwinkel bzw. die Stampfwinkelgeschwindigkeit den Durchtrittsquerschnitt durch die Durchlaßvorrichtung zu ändern.

Es sind verschiedene Möglichkeiten denkbar, eine Durchlaßvorrichtung für die Trennvorrichtung zu realisieren. Eine besteht darin, daß die Durchlaßvorrichtung eine verstellbare Klappe aufweist. Die Klappe kann von einer geeigneten Betätigungsvorrichtung verstellt werden, um den Durchströmquerschnitt auf den gewünschten Wert zu bringen. Befindet sich der Kanal in der Trennvorrichtung selbst, wird er vorzugsweise direkt unterhalb der festen Struktur vorgesehen. An dieser Stelle ist es naturgemäß am leichtesten, eine Klappe unterzubringen und sie von der festen Struktur aus über ein Stellglied zu steuern.

Eine Durchlaßvorrichtung nach einer anderen Ausgestaltung der Erfindung weist mindestens zwei aufblasbare Abschnitte auf, deren Innendruck den Durchströmquerschnitt zwischen den aufblasbaren Abschnitten bestimmt. Es ist denkbar, die aufblasbaren Abschnitte so anzuordnen bzw. auszuführen, daß der Durchströmquerschnitt sich automatisch bei verschiedenen Differenzdrücken ändert.

Für Seitenwand-Luftkissenfahrzeuge ist bekannt geworden, aufblasbare Schürzen zu verwenden, um eine wirksame Abdichtung zu erhalten. Nach einer Ausgestaltung der Erfindung kann die Trennvorrichtung eine aufblasbare Trennschürze aufweisen, deren Innendruck dem Abdichtungsgrad zwischen den Abteilen entspricht. Bei geringem Innendruck findet ein stärkerer Druckausgleich zwischen den Abteilen statt als bei einem stärkeren Innendruck. Wird daher der Innendruck von den gemessenen Parametern, wie Stampfwinkel, Stampfwinkelgeschwindigkeit oder Druck in den Abteilen abhängig gemacht, kann er ebenfalls eine Beeinflussung der Ausgleichsströmung zwischen den Abteilen bestimmen und damit das Seegangsverhalten, insbesondere das Stampfverhalten optimieren.

Die Erfindung wird nachfolgend anhand von Zeichnungen näher erläutert.
- Fig. 1: zeigt schematisch ein Seitenwand-Luftkissenfahrzeug mit einer Vorrichtung nach der Erfindung.
- Fig. 2: zeigt eine andere Ausführungsform des Seitenwand-Luftkissenfahrzeugs nach der Erfindung.
- Fig. 3: zeigt eine dritte Ausführungsform eines Seitenwand-Luftkissenfahrzeugs nach der Erfindung.
- Fig. 4: zeigt schematisch eine mittlere Trennschürze des Seitenwand-Luftkissenfahrzeugs nach der Erfindung mit einer schematisch angedeuteten Durchlaßvorrichtung.
- Fig. 5: zeigt eine Seitenansicht auf die Trennschürze nach Fig. 4 in Richtung Pfeil 5.
- Fig. 6: zeigt einen Schnitt durch eine mittlere Trennschürze des Seitenwand-Luftkissenfahrzeugs nach der Erfindung mit einer abgewandelten Durchlaßvorrichtung.
- Fig. 7: zeigt eine dritte Ausführungsform einer Durchlaßvorrichtung für die Trennschürze eines Seitenwand-Luftkissenfahrzeugs nach der Erfindung.

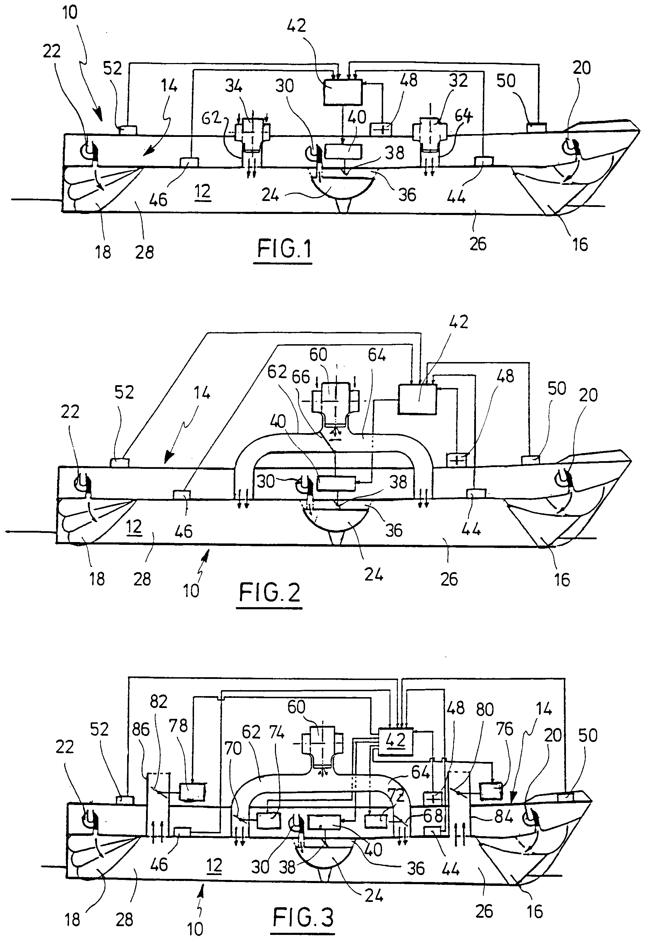

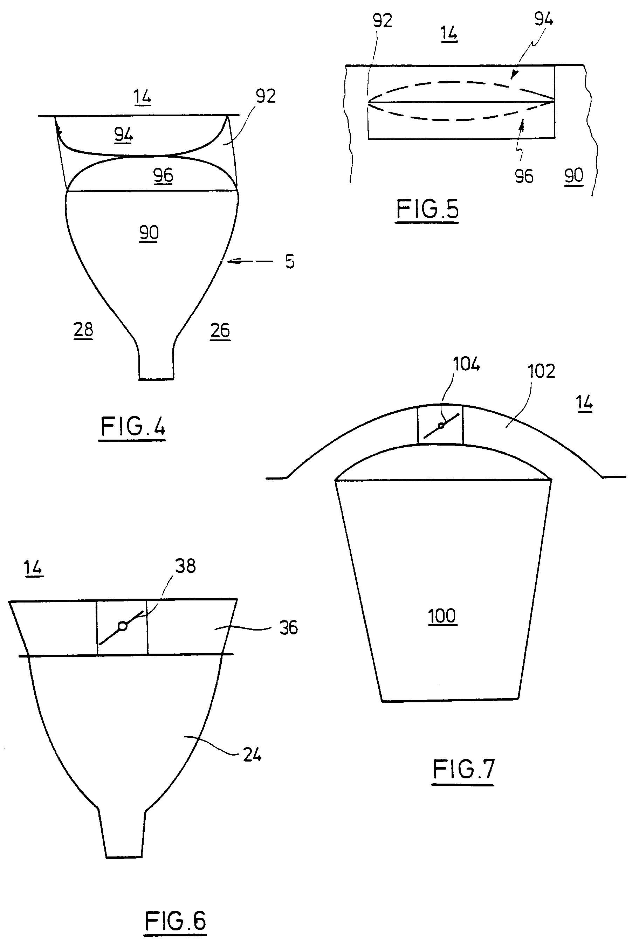

Ein Seitenwand-Luftkissenfahrzeug 10 nach Fig. 1 weist zwei parallele Rümpfe auf, von denen einer bei 12 zu erkennen ist, welche durch eine feste Struktur 14 miteinander verbunden sind. Zwischen den Rümpfen erstreckt sich im vorderen Bereich eine Bugschürze 16 und im hinteren Bereich eine Heckschürze 18, welche jeweils durch Gebläse 20, 22 aufblasbar sind zwecks Abdichtung des zwischen den Schürzen 16, 18 liegenden Raumes. Dieser ist annähernd mittig durch eine mittlere Trennschürze 24 unterteilt, welche mithin ein vorderes Abteil 26 und ein hinteres Abteil 28 bildet. Die Trennschürze 24 wird ebenfalls durch ein Gebläse 30 aufgeblasen. Den Abteilen 26, 28 ist ein Lüfter 32, 34 zugeordnet, mit denen die Abteile 26, 28 über Kanäle 62, 64 unter vorgegebenen Druck gesetzt werden können zur Bildung von Luftkissen, die das Fahrzeug 10 im Wasser anheben. Wie erkennbar, ist unterhalb der festen Struktur 14 im Bereich der Trennschürze 24 ein Kanal 36 gebildet, in dem eine verschwenkbare Klappe 38 angeordnet ist. Die Klappe 38 ist durch ein Stellglied 40 verstellbar, das von einem Prozessor 42 angesteuert ist. Diese Anordnung ist in Fig. 6 vergrößert dargestellt.

Den Abteilen 26, 28 sind Drucksensoren 44, 46 zugeordnet, die mit dem Prozessor 42 verbunden sind. Ein Kreisel 48 sowie ein vorderer Bewegungssensor 50 und ein hinterer Bewegungssensor 52 sind ebenfalls mit dem Prozessor verbunden. Die Sensoren 50, 52 messen z.B. den Stampfwinkel, und mit Hilfe des Kreisels 48 kann außerdem die Lage des Fahrzeugs 10 bestimmt werden. Bewegt sich das Schiff 10 stampfend im Wasser, kommt es zu Druckdifferenzen zwischen den Abteilen 26, 28, die das Stampfverhalten unter Umständen noch ungünstig beeinflussen. Über den Kanal 36 erfolgt in dosierter Weise ein Druckausgleich zwischen den Abteilen 26, 28 wobei die Querschnittsbegrenzung im Kanal 36 durch die Stellung der Klappe 38 bestimmt ist. Die Stellung erfolgt in Abhängigkeit von den gemessenen Werten für den Stampfwinkel oder die Stampfwinkelgeschwindigkeit, die sich im Prozessor 42 aus den Winkelwerten errechnen läßt. Ferner kann zusätzlich oder unabhängig davon die Einstellung der Klappe 38 von den Werten abhängig gemacht werden, die von den Drucksensoren 44, 46 ermittelt werden.

Soweit in der Ausführungsform nach Fig. 2 gleiche Teile verwendet sind, werden gleiche Bezugszeichen wie in Fig. 1 verwendet. Das Seitenwand-Luftkissenfahrzeug nach Fig. 2 unterscheidet sich von dem nach Fig. 1 dadurch, daß ein einziges Gebläse 60 über zwei Kanäle 62, 64 die Abteile 26, 28 mit Druckluft versorgt, wobei die Verteilung der Druckluft zu den Abteilen 26, 28 durch die Stellung einer Klappe 66 bestimmt ist, die ebenfalls vom Stellglied 40 betätigt wird. Die Beeinflussung des Stampfverhaltens durch Druckausgleich zwischen den Abteilen 26, 28 erfolgt in der gleichen Weise, wie zu Fig. 1 beschrieben.

Bei der Ausführungsform nach Fig. 3 sind wiederum gleiche Teile wie bei den Ausführungsformen nach den Fig. 1 und 2 mit gleichen Bezugszeichen versehen. In den Kanalabschnitten 62, 64 ist jeweils eine Drosselklappe 68, 70 angeordnet, die von Stellgliedern 72, 74 betätigbar sind. Die Ansteuerung der Stellglieder erfolgt ebenfalls vom Prozessor 42, der außerdem mit Stellgliedern 76, 78 verbunden ist zur Betätigung von Klappen 80, 82 in Auslaßschächten 84, 86 zur Entlüftung der Abteile 26, 28. Die Abteile 26, 28 können daher mit Hilfe des Lüfters 60 und der Entlüftungen 84, 86 gezielt belüftet und entlüftet werden, wobei ein Druckausgleich zusätzlich über den Kanal 36 in der Trennschürze 24 stattfinden kann. Die Ansteuerung dieser Teile durch den Prozessor 42 erfolgt derart, daß ein optimales Bewegungsverhalten des Schiffes 10 erzielt wird in Anpassung an die jeweilige Wasserbewegung.

In den Fig. 4 und 5 ist eine mittlere Trennschürze 90 dargestellt, die unterhalb der festen Struktur 14 einen Kanal 92 aufweist, der mit Hilfe von zwei flexiblen Schläuchen 94, 96 verschlossen werden kann. Der Druck innerhalb der Schläuche 94, 96 bestimmt den Durchtrittsquerschnitt, wie etwa anhand von Fig. 5 durch die gestrichelten und die durchgezogenen Linien zu erkennen. Der Luftdruck wird in ähnlicher Weise gesteuert wie die Klappe 36 bei den Ausführungsformen nach den Fig. 1 bis 3 zur Bestimmung des gewünschten Durchströmquerschnitts für den zu erzielenden Druckausgleich zwischen den Abteilen 26, 28.

Bei der Ausführungsform nach Fig. 7 ist eine Trennschürze 100 vorgesehen, die beispielsweise Mäanderform aufweist. Sie ist bis zur festen Struktur 14 durchgehend und durch einen Kanal 102 in der festen Struktur 14 überbrückbar. Im Kanal 102 ist eine Klappe 104 angeordnet, die in ähnlicher Weise betätigbar ist, wie die Klappe 38 in den Ausführungsformen nach den Fig. 1 bis 3 und 6.

## Patentansprüche

1. Seitenwand-Luftkissenfahrzeug mit zwei parallelen Rümpfen (12), die mit einer festen Struktur (14) über der Wasseroberfläche miteinander verbunden sind, mit je einer flexiblen Schürze (16, 18) im Vor- und Hinterschiff, einer den Luftkissenraum zwischen Bug- und Heckschürze etwa auf halber Länge unterteilenden querverlaufenden Trennvorrichtung (24, 90, 100), welche die so gebildeten Abteile (26, 28) auch bei einem Differenzdruck zwischen den Abteilen (26, 28) annähernd druckdicht voneinander trennt, mit den Abteilen (26, 28) verbundenen Kanälen (62, 64), die wahlweise mit einem gemeinsamen Gebläse (60) oder mit jeweils einem zugeordneten Gebläse (32, 34) verbunden sind zum Aufbau eines Druckkissens in den Abteilen (26, 28) und einer Steuer- und Regelvorrichtung (42), die den Stampfwinkel oder die Stampfwinkelgeschwindigkeit des Schiffes abtastet als Regelgröße für den Luftdruck in den Luftkissenabteilen (26, 28), dadurch gekennzeichnet, daß die Trennvorrichtung (24, 90, 100) einen von den Kanälen (62, 64) getrennten, die Abteile (26, 28) verbindenden Kanal (36, 92, 102) aufweist, in dem eine verstellbare von einer Betätigungsvorrichtung (40) verstellbare, von der Steuer- und Regelvorrichtung (42) betätigbare Durchlaßvorrichtung (38; 104; 94, 96) angeordnet ist, deren Durchtrittsquerschnitt in Abhängigkeit von dem Stampfwinkel, der Stampfwinkelgeschwindigkeit und/oder dem Druck in den Abteilen (26, 28) verstellt wird.

2. Fahrzeug nach Anspruch 1, dadurch gekennzeichnet, daß die Trennvorrichtung bei annähernd gleichem Druck in den Abteilen (26, 28) relativ weich und flexibel ist, jedoch bei einer Druckdifferenz relativ steif ist.

3. Fahrzeug nach Anspruch 1 oder 2, dadurch gekennzeichnet, daß die Durchlaßvorrichtung eine verstellbare Klappe (38, 104) aufweist.

4. Fahrzeug nach Anspruch 3, dadurch gekennzeichnet, daß der Kanal (36) in der Trennvorrichtung (24) unmittelbar unterhalb der festen Struktur (14) vorgesehen ist.

5. Fahrzeug nach Anspruch 3, dadurch gekennzeichnet, daß der Kanal (92) in der Trennvorrichtung (90) mindestens zwei aufblasbare Abschnitte (94, 96) aufweist, deren Innendruck den Durchströmquerschnitt zwischen den Abschnitten bestimmt, wobei der Durchströmquerschnitt gegebenenfalls abhängig ist von dem zwischen den Abteilen (26, 28) wirkenden Differenzdruck.

6. Fahrzeug nach Anspruch 1, dadurch gekennzeichnet, daß die Trennvorrichtung eine aufblasbare Trennschürze (24) aufweist, deren Innendruck den Abdichtungsgrad zwischen den Abteilen (26, 28) bestimmt.

## Claims

1. A sidewall air cushion vehicle comprising a pair of parallel body members (12) which are connected to each other by a rigid structure (14) above the water surface, a flexible skirt (16, 18) each in the bow part and stem part of the vehicle, a partition device (24, 90, 100) extending transversely and dividing the air cushion space between the bow and stern skirts at substantially the mid thereof so as to provide a pair of compartments (26, 28), which partition device separates the thus formed compartments (26, 28) from each other in a substantially pressure-tight manner even when there is a pressure differential between the compartments (26, 28, ducts 62, 64) communicating with the compartments (26, 28) and adapted to be selectively connected to a common fan (60) or fans (32, 34) associated with each of said ducts in order to generate a pressure cushion in the compartments (26, 28), and a control device (42) for sensing the pitch angle or the pitch angle velocity of the vehicle which are to be used as control parameters for the air pressure in the air cushion compartments (26, 28), characterized in that the partition device (24, 90, 100) includes a duct (36, 92, 102) separate from said ducts (62, 64) and interconnecting the compartments (26, 28), a flow control means (38; 104; 94, 96) which is adjustable by an actuating device (40) and is actuatable by the control device (42) being positioned in said duct, with the flow cross sectional area of said flow control means being adjusted in response to the pitch angle, the pitch angle velocity and/or the pressure in the compartments (26, 28).

2. A vehicle according to claim 1, characterized in that the partition device is relatively soft and flexible when the pressures in the compartments (26, 28) are substantially the same, and which is relatively stiff when there is a pressure differential.

3. A vehicle according to claim 1 or claim 2, characterized in that the flow control device comprises an adjustable flap (38, 104).

4. A vehicle according to claim 3, characterized in that the duct (36) in the partition device (24) is provided immediately below the rigid structure (14).

5. A vehicle according to claim 3, characterized in that the duct (92) in the partition device (90) includes at least two inflatable portions (94, 96) the internal pressure of which determines the flow cross sectional area between the compartments, with the flow cross sectional area being dependent on the pressure differential effective between the compartments (26, 28).

6. A vehicle as defined in claim 1, characterized in that the partition device comprises an inflatable partition skirt (24) the internal pressure of which determines the degree of fluid tightness between the compartments (26, 28).

## Revendications

1. Véhicule à coussin d'air à paroi latérale comportant
deux corps parallèles (12), reliés l'un à l'autre au-dessus de la surface de l'eau par une structure fixe (14),
présentant chacun une jupe flexible (16, 18) à l'avant et à l'arrière, un dispositif séparateur (24, 90, 100) transversal divisant l'espace du coussin d'air entre jupe avant et jupe arrière à peu près à mi-longueur, qui sépare l'un de l'autre de manière presque étanche à la pression les compartiments (26, 28) ainsi formés même en cas de différence de pression entre les compartiments (26, 28)
des canaux (62, 64) reliés aux compartiments (26, 28), qui sont reliés au choix à une soufflante commune (60) ou respectivement à une soufflante correspondante (32, 34) pour constituer un coussin de pression dans les compartiments (26, 28) et un dispositif de commande et de régulation (42), qui analyse l'angle de tangage ou la vitesse de tangage du navire comme grandeur de réglage pour la pression de l'air dans les compartiments du coussin d'air (26, 28),
caractérisé en ce que le dispositif de séparation (24, 90, 100) présente un canal (36, 92, 102), séparé des canaux (62, 64), reliant les compartiments (26, 28), dans lequel est monté un dispositif réglable de passage (38; 104; 94; 96) actionnable par le dispositif de commande et de régulation (42), qui peut être réglé par un dispositif de commande (40) et dont la section de passage transversale est réglée en fonction de l'angle de tangage, de la vitesse de tangage et/ou de la pression dans les compartiments (26, 28).

2. Véhicule selon la revendication 1, caractérisé en ce que le dispositif de séparation est relativement mou et flexible quand il existe une pression aproximativement égale dans les compartiments (26, 28), mais relativement rigide quand il existe une différence de pression.

3. Véhicule selon la revendication 1 ou 2, caractérisé en ce que le dispositif de passage comporte un volet (38, 104) réglable.

4. Véhicule selon la revendication 3, caractérisé en ce que le canal (36) est prévu dans le dispositif de séparation (24) immédiatement au-dessous de la structure fixe (14)

5. Véhicule selon la revendication 3, caractérisé en ce que le canal (92) comporte dans le dispositif de séparation (90) au moins deux compartiments (94, 96) gonflables, dont la pression intérieure détermine la section de passage entre les compartiments, la section de passage dépendant éventuellement de la différence de pression qui s'exerce entre les compartiments (26, 28).

6. Véhicule selon la revendication 1, caractérisé en ce que le dispositif de séparation comporte une jupe de séparation gonflable (24), dont la pression intérieure détermine le degré d'étanchéité entre les compartiments (26, 28).
